# EUROPÄISCHE PATENTSCHRIFT

(11) **EP 0 238 043 B1**
(45) Veröffentlichungstag und Bekanntmachung des Hinweises auf die Patenterteilung: **24.02.1993**
(21) Anmeldenummer: 87103855.0
(22) Anmeldetag: 17.03.1987
(51) Int. Cl.: D21H 21/42, B44F 1/12

(54) **Sicherheitsdokument mit darin eingelagertem Sicherheitsfaden**
Security document incoporating a security thread
Document de sécurité à fil de sécurité incorporé

(30) Priorität: 18.03.1986 DE 3609090
(43) Veröffentlichungstag der Anmeldung: 23.09.1987
(60) Teilanmeldung: 91121873.3
(73) Patentinhaber: GAO Gesellschaft für Automation und Organisation mbH, 81307 München (DE)
(72) Erfinder: Kaule, Wittich, Dr. Phys., D-8089 Emmering (DE); Schwenk, Gerhard,Dr. Chem., D-8039 Puchheim (DE); Moll, Jürgen, Dr. Chem., D-8022 Grünwald (DE); Stenzel, Gerhard, Dr. Phys., D-8000 München 2 (DE)
(74) Vertreter: Klunker . Schmitt-Nilson . Hirsch

(56) Entgegenhaltungen:
- CH-A- 655 062
- DE-A- 1 436 531
- DE-A- 1 597 641
- DE-A- 1 921 182
- DE-A- 2 057 435
- DE-A- 2 743 019
- DE-A- 3 432 712
- DE-B- 2 555 214
- DE-C- 177 280
- FR-A- 2 126 500
- GB-A- 1 067 514
- GB-A- 2 103 669
- US-A- 3 241 429
- US-A- 3 666 587
- US-A- 3 884 554
- Patent Abstracts of Japan, Bd. 8, Nr. 73(M-287)(1510), 05.04.84 & JP-A-58 219 055 (MATSUSHITA DENKI SANGYO K.K.) 20.12.83

## Beschreibung

Die Erfindung betrifft ein Sicherheitsdokument mit einem im Innern des Dokuments eingelagerten Sicherheitsfaden.

Zur Erhöhung der Fälschungssicherheit von Wertpapieren, Ausweiskarten, Dokumenten, etc. ist es bekannt, neben anderen Sicherheitsmerkmalen diesen auch einen Sicherheitsfaden einzuverleiben. Bei Papierprodukten wird dieser z. B. während der Papierherstellung in die sich bildende Faserschicht eingeführt, während er bei mehrschichtigen Kunststoffprodukten zwischen zwei Einzelschichten eingelagert wird. Derartige Sicherheitsfäden können z. B. mit maschinell prüfbaren Zusatzstoffen versetzt sein (DE-A- 16 96 245) oder bestimmte optische Eigenschaften aufweisen, wie z. B. eine in Transmission und Reflexion unterschiedliche Farbgebung (DE-A- 27 43 019).

Auch ist es bekannt, Sicherheitsfäden z. B. mit einem Schriftzug zu bedrucken. Dabei werden zunächst Folienbahnen bedruckt und diese anschließend in Streifen geschnitten. Da ein zum Druckbild registergenaues Schneiden der Folie nur schwer zu realisieren ist, wird der Abstand der Einzelnen Schriftzüge und die Breite der Fäden so gewählt, daß sich zumindest immer ein Schriftzug vollständig auf den geschnittenen Faden wiederfindet (DE-A- 14 46 851).

Des weiteren ist es auch bekannt, Sicherheitsfäden mit einer optisch variierenden Struktur, wie z. B. einem Beugungsgitter, in Dokumente einzusetzen (DE-C- 25 55 214, DE-A- 30 13 238).

Damit enthält das Sicherheitsdokument ein Merkmal, das sich bei einer fotografischen oder kopiertechnischen Reproduktion des Dokuments nicht in dieser Form nachbilden läßt.

Als nachteilig erweist es sich, bei den bekannten Sicherungsmitteln, daß diese entweder nur maschinell oder nur unter besonderen Lichtverhältnissen prüfbar sind, daß die optischen Effekte vom Betrachter nur sehr schwach, nur mit Hilfsmitteln oder gar nur für den Fachmann zu erkennen sind. In vielen Fällen genügt es daher bereits, Fälschungen von Dokumenten mit einfachen Plagiaten niedrigerer Qualität auszustatten, um die Echtheit vorzutäuschen. Derartige Fäden sind daher als einfach visuell prüfbare Echtheitsmerkmale weniger geeignet.

Die Aufgabe der Erfindung ist es daher, einen Sicherheitsfaden für Sicherheitsdokumente vorzuschlagen, wobei dieser Sicherheitsfaden in einfacher Weise ohne technische Hilfsmittel visuell prüfbar sein soll und der Sicherheitsfaden Eigenschaften aufzuweisen hat, die bei einer fotografischen oder kopiertechnischen Reproduktion des Dokuments verlorengehen.

Diese Aufgabe wird durch die im Kennzeichen des Anspruchs 1 enthaltenen Merkmale gelöst.

Der erfindungsgemäße Sicherheitsfaden, der aus einem transparenten Material , vorzugsweise Kunststoff, besteht, hat in der Regel eine rechteckige Querschnittsstruktur und eine Breite von ca. 0,5 mm bis 2 mm, wobei in einer bevorzugten ausführungsform auf einer Oberfläche ein Raster aus mehreren parallel laufenden Zylinderlinsen eingeprägt ist. Die Dicke des Sicherheitsfadens ist dabei so gewählt, daß sie in etwa der Fokuslänge der Zylinderlinsen entspricht. Auf der gegenüberliegenden Oberfläche ist ein Druckbild aufgebracht. Das Druckbild ist unter Berücksichtigung der optischen Eigenschaften der Zylinderlinsen gestaltet. Aufgrund der fokussierenden Wirkung der Zylinderlinsen und der Lage des Druckbilds in der Fokusebene sind je nach Blickwinkel unterschiedliche Teilbereiche des Druckbilds sichtbar. Durch entsprechende Gestaltung des Druckbilds können damit Informationen eingebracht werden, die nur unter bestimmten Blickwinkeln sichtbar sind. Es können aber auch "bewegte" Bilder erzeugt werden, wobei das Druckbild so gestaltet ist, daß bei Drehung des Dokuments um eine zu den Zylinderlinsen parallel laufenden Achse sich ein Motiv nahezu kontinuierlich von einem Ort auf dem Sicherheitsfaden zu einem anderen Ort bewegt.

Diese Effekte, die durch ein über einem Druckbild angeordnetes Linsenraster erzeugt werden, sind bekannt. Verwendet werden derartige Parallaxenbilder allerdings zu Werbezwecken, als Dekoration bei Grußkarten oder Titelseiten von Zeitungen (US-A- 3,241,429; DE-A- 15 97 641; DE-A- 20 57 435), d.h. im Zusammenhang mit im Vergleich zu Sicherheitsfäden großen Gegenständen.

Bei der Herstellung dieser Sicherheitsfäden ist darauf zu achten, daß die Druckstreifen in präziser Ausrichtung zu den Zylinderlinsen auf dem Trägerblatt aufgebracht werden. Insbesondere bei Verwendung von Zylinderlinsen mit kleiner Linsenbreite ( 100 µ) stellt die Erstellung eines entsprechend feinen Druckbildes sowie das registergenaue Aufdrucken der einzelnen Streifenbilder in Relation zu den Zylinderlinsen hohe Anforderungen.

Mit speziellen Drucktechniken (z. B. nach den Folientiefdruck- oder Näpfchentiefdruck-Verfahren) sowie über geeignete Verfahren, ist es aber möglich, sogenannte Mikrodruckbilder herzustellen und diese registergenau zu den Zylinderlinsen auf den Träger aufzubringen. Damit ist es nun möglich, derartige Elemente als Sicherheitselemente zu verwenden und diese in Form von Fäden in Sicherheitsdokumente einzubetten. Wegen seiner schwierigen technischen Gestaltung zeichnet sich dieser Faden durch eine besonders hohe Fälschungssicherheit aus.

Der erfindungsgemäße Sicherheitsfaden hat weiterhin den Vorteil, daß er mit einem sicherheitstechnisch hochwertigen Mikrodruckbild versehen werden kann, wobei dieses an sich mit bloßem Auge nur sehr schwer auflösbare Druckbild ohne technische Hilfsmittel prüfbar ist, da es nun durch darüberliegenden Zylinderlinsen vergrößert wird.

Der Sicherheitsfaden kann nach den herkömmlichen Verfahren in das Sicherheitsdokument eingebettet werden. Bei der Einbettung in Papier werden zur besseren Sichtbarmachung vorzugsweise Fenster in die den Faden überlagernde Papierschicht eingebracht. Wertpapiere mit im Fensterbereich freiliegenden Fäden sowie Verfahren zur Herstellung derselben sind z. B. aus der DE-C- 214 838, DE-C- 341 970 oder DE-A- 27 43 019 bekannt. Der Faden kann aber auch so eingebettet werden, daß er nur von einer dünnen Papierschicht überdeckt ist, so daß die Sichtbarkeit des Fadens nur unwesentlich eingeschränkt wird.

Durch die darüberliegende Papierschicht wird gleichzeitig die Oberflächenstruktur des Fadens gegen Abrieb geschützt. Zudem haften insbesondere die Fäden, bei denen die Zylinderlinsen quer zur Fadenrichtung verlaufen, sehr gut im Papier, da die Fadenstruktur und die Papierfaserstruktur ineinandergreifen. Ein derartiger Faden kann nicht ohne Zerstörung des Papierblatts aus dem Papier "herausgezogen" werden.

Weitere Vorteile und vorteilhafte Weiterbildungen sind Gegenstand der Unteransprüche und der Beschreibung anhand der Figuren.

Die Figuren zeigen:
- Fig. 1: ein Wertpapier mit darin eingelagertem Sicherheitsfaden in einer Schnittansicht,
- Fig. 2: einen erfindungsgemäßen Sicherheitsfaden in einer Schnittansicht,
- Fig. 3: eine schematische Darstellung einer speziellen Ausführungsform,

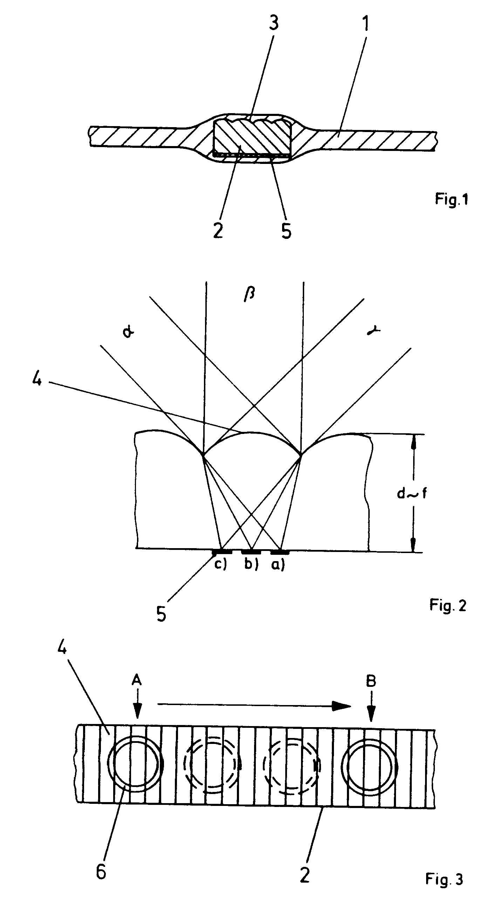

Die Fig. 1 zeigt ein erfindungsgemäßes Sicherheitsdokument 1 in einer Schnittansicht. Das Sicherheitsdokument ist z. B. eine Banknote oder ein Wertpapier, bestehend aus einer ein- oder mehrlagigen Papierschicht, in dessen Inneren ein Sicherheitsfaden 2 eingelagert ist. Der Sicherheitsfaden besteht aus einem transparenten Material, z. B. Kunststoff, in dessen eine Oberfläche eine Reliefstruktur 3 in Form mehrerer parallel nebeneinander angeordneter Zylinderlinsen 4 eingeprägt ist (Fig. 2). Auf der gegenüberliegenden Oberfläche ist ein Druckbild aufgebracht, das sich im Prinzip, wie in Fig. 2 gezeigt, aus mehreren Einzelstreifen, z. B. drei Streifen, a, b und c, zusammensetzt. Die einzelnen Streifen sind unter verschiedenen Betrachtungswinkeln α, β, γ getrennt sichtbar. Sind die Streifen z. B. einzelne Farbstreifen mit unterschiedlicher Farbgebung, so wechselt der Sicherheitsfaden unter leichtem Kippen des Dokuments seine Farbe. Das Druckbild kann aber auch so gestaltet werden, daß sich die Einzelstreifen, die unter einem Betrachtungswinkel gleichzeitig sichtbar sind, z. B. die mit a) gekennzeichneten Streifen, ein sich über die gesamte Fadenbreite und -länge erstreckendes Motiv wiedergeben. Der Faden kann damit mehrere, unter anderem voneinander unabhängige Informationen in sich bergen, die dann unter verschiedenen Betrachtungswinkeln getrennt auslesbar sind.

Eine weitere Gestaltungsmöglichkeit ist in der Fig. 3 gezeigt. Die Zylinderlinsen 4 verlaufen hier quer zur Fadenrichtung. Ein Motiv, z. B. ein Ring 6 ist in sich wiederholenden Abständen so in Korrelation zu den Zylinderlinsen aufgedruckt, daß sich dessen Lage auf den Faden mit Änderung des Betrachtungswinkels verschiebt und das Motiv sich unter leichtem Kippen von einer ersten Position A zu einer zweiten Position B bewegt. Dem Betrachter wird damit der Eindruck eines sich "bewegenden" Bildes vermittelt. Das Motiv, in diesem Fall ein Ring, muß hierzu natürlich in entsprechende Streifenbilder zerlegt und diese Enzelstreifen bezüglich der Lage der Zylinderlinsen so aufgedruckt werden, daß sich diese Streifen bei Betrachtung des Fadens durch die Zylinderlinsen wieder zu einem Ring zusammensetzen und sich dessen Lage auf dem Faden unter Veränderung des Blickwinkels verschiebt. Die Einzelstreifen, die zur Darstellung eines Rings beitragen, werden dazu in Laufrichtung des Fadens jeweils um eine bestimmte Strecke gegenüber der Zylinderlinsenmitte versetzt aufgedruckt. Die Verwendung der Kippbildeffekte auf quergestreiften Sicherheitsfäden ist selbstverständlich ebenso möglich, wie die des Bewegungsbildeffektes bei längsgestreiften Fäden. Eine Kombination beider Effekte auf einem Sicherheitsfaden ist ebenso denkbar.

Die Dicke d des Sicherheitsfadens und der Krümmungsradius der Zylinderlinsen ist in Abhängigkeit des Brechungsindex des Fadenmaterials so gewählt, daß das Druckbild möglichst in der Fokusebene der Zylinderlinsen liegt.

Sicherheitsdokumente wie z. B. Banknoten haben im allgemeinen eine Dicke von ca. 100 µ. Der darin eingebettete Faden sollte daher eine Gesamtdicke d von ca. 70 µ nicht überschreiten. Der erforderliche Krümmungsradius der Zylinderlinsen errechnet sich unter Annahme eines Brechungsindex des Fadenmaterials von 1,5, wie bei Kunststoffen allgemein üblich, nach der Formel d = 3 x r = f, wobei f die Brennweite der Linse ist. Bei der genannten Foliendicke erhält man demnach etwa 20 Linsen pro mm. Die in Fig. 2 dargestellten Streifen a, b, c (statt Schriftzeichen, etc.) sind in diesem Fall mit einer jeweiligen Streifenbreite von etwa 16 µ aufzudrucken.

Wählt man bei einer Foliendicke von etwa 70 µ ein Linsenraster von 10 Linsen pro mm mit entsprechend größerem Krümmungsradius, so werden die einzelnen Streifen des Druckmusters einerseits nur mehr unscharf weidergegeben, was andererseits aber die Möglichkeit gibt, die Streifen mit doppelter Breite aufzudrucken, was technisch einfacher zu realisieren ist. Da die Streifen ohnehin jeweils über die gesamte Linsenbreite nur einen homogenen Farbeindruck gestatten, ist diese Unschärfe der Linien über die Breite des Sicherheitsfadens für den Gesamteindruck nicht störend.

Obwohl bei der letztgenannten Ausführungsform die Streifenbreite etwa 30 µ betragen kann, stellt ein derartiges Druckmuster noch immer höchste Anforderungen an die Druckqualität. Für mit einfachen Mitteln ausgestattete Fälscher ist ein derartiges Druckmuster nicht nachvollziehbar. Trotz dieses feinen Linienmusters ist der Sicherheitsfaden aber vom Betrachter ohne Hilfsmittel wie Lupen oder dergleichen prüfbar, da für ihn unter den jeweiligen Betrachtungswinkeln großflächige Farbeffekte erkennbar sind, die sich jeweils über die ganze Sicherheitsfadenbreite erstrecken.

Anstatt der Zylinderlinsen können auch andere Prägestrukturen, die ebenfalls eine fokussierende Wirkung haben, z. B. Kugellinsen oder Wabenlinsen, vorgesehen werden. Das Druckbild ist dann selbstverständlich den optischen Verhältnissen der jeweiligen Linsenart anzupassen.

Des weiteren können anstatt der Linsen auch optisch ähnlich wirkende Maßnahmen getroffen werden, um ein vom Betrachtungswinkel abhängiges, sich veränderndes Erscheinungsbild des Fadens zu erreichen. So kann z. B. ein Sicherheitsfaden, bestehend aus einer transparenten Folie beidseitig bedruckt werden, wobei das Druckbild einer Folienseite so gestaltet ist, daß es dem Betrachter in Abhängigkeit vom Betrachtungswinkel - unterschiedliche Bereiche des dem Betrachter abgekehrten rückseitigen Druckbilds des Fadens freigibt. So wird z. B. die den Sicherheitsfaden bildende Folie auf einer Seite mit einem Strichraster oder einem Negativ-Punktraster bedruckt. Diese Raster wirken bei entsprechender Dimensionsierung der Rasterstrukturen und der Foliendicke wie Blenden, die das Blickfeld eingrenzen, sodaß je nach Betrachtungswinkel nur bestimmte begrenzte Flächenbereiche der gegenüberliegenden Folienoberfläche sichtbar sind. Gestaltet man das auf der gegenüberliegenden Folienoberfläche liegende Druckbild entsprechend dieser Blendenstruktur, ist die Erzeugung von Sicherheitsfäden möglich, die unter Variation des Betrachtungswinkels ihr visuelles Erscheinungsbild wie z. B. die Farbe, das Design etc. ändern.

In einer weiteren Ausführungsform wird die optische Struktur, wie z. B. die Linsenstruktur, auf zwei sich gegenüberliegenden Oberflächen eines im wesentlichen rechtwinkligen Sicherheitsfadens aufgebracht und das Druckbild dementsprechend vorzugsweise in der Mittenebene des Fadens angeordnet. Die sich gegenüberliegenden Linsen können dabei gleichgeartet sein sowie deckungsgleich als auch versetzt zueinander angeordnet werden.

## Patentansprüche

1. Sicherheitsdokument mit einem im Inneren des Dokuments eingelagerten Sicherheitsfaden, der aus einem transparenten Material besteht und ein Druckbild (a, b, c; 6) aufweist,
dadurch gekennzeichnet,
daß der Sicherheitsfaden (2) in einem vom Druckbild beabstandeten und den äußeren Oberflächenbereich des Sicherheitsfadens (2) bildenden Schichtbereich eine optisch wirksame Struktur (3) aufweist, die bei Betrachtung des Druckbilds durch diese Struktur hindurch bewirkt, daß unter verschiedenen Betrachtungswinkeln (α, β, γ) unterschiedliche Bereiche des Druckbilds (a, b, c; 6) erkennbar sind und daß das Druckbild (a, b, c; 6) in Bezug auf die optische Struktur (3) so gestaltet ist, daß sich das optische Erscheinungsbild des Sicherheitsfadens (2) mit Änderung des Betrachtungswinkels (α, β, γ) ebenfalls ändert.

2. Sicherheitsdokument nach Anspruch 1,
dadurch **gekennzeichnet,**
daß diese optisch wirksame Struktur (3) eine Reliefstruktur, bestehend aus einer oder mehreren Einzellinsen (4), ist.

3. Sicherheitsdokument nach Anspruch 1,
dadurch **gekennzeichnet,**
daß die optisch wirksamen Strukturen teildurchlässige einen Blendeneffekt bewirkende Oberflächenschichtbereiche wie z. B. aufgedruckte Rasterstrukturen sind, die sich aus lichtdurchlässigen und lichtundurchlässigen Bereichen zusammensetzen.

4. Sicherheitsdokument nach einem der Ansprüche 1 bis 3,
dadurch **gekennzeichnet,**
daß der Faden (2) einen im wesentlichen rechteckigen Querschnitt aufweist und das Druckbild (a, b, c; 6) und die Struktur (3) auf zwei sich gegenüberliegenden Oberflächen des Sicherheitsfadens vorliegen.

5. Sicherheitsdokument nach einem der Ansprüche 1 bis 4,
dadurch **gekennzeichnet,**
daß der Sicherheitsfaden (2) eine im wesentlichen rechteckige Querschnittsform besitzt, der Faden (2) auf zwei sich gegenüberliegenden Oberflächen optisch wirksame Strukturen (3) aufweist und das Druckbild (a, b, c; 6) in einer zu diesen Oberflächen im wesentlichen parallelen inneren Schichtebene des Sicherheitsfadens (2) angeordnet ist.

6. Sicherheitsdokument nach einem der Ansprüche 1 bis 5,
dadurch **gekennzeichnet,**
daß die Einzellinsen (4) Zylinderlinsen sind, die längs oder quer zur Fadenrichtung verlaufen.

7. Sicherheitsdokument nch einem der Ansprüche 1 bis 6,
dadurch **gekennzeichnet,**
daß das Druckbild (a, b, c; 6) so ausgeführt ist, daß unter einem bestimmten Betrachtungswinkelbereich eine Information zu erkennen ist, die bei einer Betrachtung außerhalb dieses Winkelbereichs nicht sichtbar ist.

8. Sicherheitsdokument nach Anspruch 7,
dadurch **gekennzeichnet,**
daß diese Information eine bestimmte Farbgebung ist.

9. Sicherheitsdokument nach Anspruch 7,
dadurch **gekennzeichnet,**
daß diese Information ein Schriftzug ist.

10. Sicherheitsdokument nach einem der Ansprüche 1 bis 9,
dadurch **gekennzeichnet,**
daß das Druckbild so ausgeführt ist, daß eine Information unter verschiedenen Betrachtungswinkeln an lokal unterschiedlichen Orten auf dem Sicherheitsfaden (2) erscheint.

11. Sicherheitsdokument nach einem der Ansprüche 1 bis 10,
dadurch **gekennzeichnet,**
daß der Sicherheitsfaden (2) nur von einer dünnen Papierschicht überlagert ist, die im wesentlichen transparent ist.

12. Sicherheitsdokument nach einem der Ansprüche 1 bis 11,
dadurch **gekennzeichnet,**
daß das Sicherheitsdokument (1) im Bereich des Sicherheitsfadens (2) zumindest partiell transparente Bereiche oder Öffnungen aufweist.

13. Sicherheitsdokument nach einem der Ansprüche 1 bis 12,
dadurch **gekennzeichnet,**
daß das Sicherheitsdokument (1) ein Wertpapier ist.

## Claims

1. A security document having a safeguarding thread embedded within the document that is made of a transparent material and exhibits a printed pattern (*a*, *b*, *c*; 6), **characterized** in that the safeguarding thread (2) has in a layer area spaced away from the printed pattern and forming the outer surface area of the safeguarding thread (2) an optically effective structure (3) which, when the printed pattern is viewed through this structure, has the effect that different areas of the printed pattern (*a*, *b*, *c*; 6) are recognizable at different viewing angles, and the printed pattern (*a*, *b*, *c*; 6) is designed with respect to the optical structure (3) in such a way that the optical appearance of the safeguarding thread (2) changes when the viewing angle (α, β, ) changes.

2. The security document of claim 1, characterized in that this optically effective structure (3) is a relief structure consisting of one or more individual lenses (4).

3. The security document of claim 1, characterized in that the optically effective structures are partially transparent surface layer areas, such as printed screen structures, that create a diaphragm effect and are composed of transparent and opaque areas.

4. The security document of any of claims 1 to 3, characterized in that the thread (2) has a substantially rectangular cross-section and the printed pattern (*a*, *b*, *c*; 6) and the structure (2) are present on two opposite surfaces of the safeguarding thread.

5. The security document of any of claims 1 to 4, characterized in that the safeguarding thread (2) has a substantially rectangular cross-sectional shape, the thread (2) has optically effective structures (3) on two opposite surfaces, and the printed pattern (*a*, *b*, *c*; 6) is disposed on an inner layer plane of the safeguarding thread (2) that is substantially parallel to these surfaces.

6. The security document of any of claims 1 to 5, characterized in that the individual lenses (4) are cylinder lenses which extend lengthwise or crosswise to the direction of the thread.

7. The security document of any of claims 1 to 6, characterized in that the printed pattern (*a*, *b*, *c*; 6) is designed in such a way that in a certain viewing angle range a piece of information can be detected which is not visible when viewed outside this angle range.

8. The security document of claim 7, characterized in that this piece of information is a certain coloration.

9. The security document of claim 7, characterized in that this piece of information is writing.

10. The security document of any of claims 1 to 9, characterized in that the printed pattern is designed in such a way that a piece of information appears at locally different places on the safeguarding thread (2) at different viewing angles.

11. The security document of any of claims 1 to 10, characterized in that the safeguarding thread (2) is covered only by a thin paper layer that is substantially transparent.

12. The security document of any of claims 1 to 11, characterized in that the security document (1) has at least partially transparent areas or openings in the area of the safeguarding thread (2).

13. The security document of any of claims 1 to 12, characterized in that the security document (1) is a paper of value.

## Revendications

1. Document de sécurité muni d'un fil de sécurité incorporé à l'intérieur du document, et qui se compose d'un matériau transparent et comporte une image imprimée (a, b, c; 6), caractérisé en ce que le fil de sécurité (2) comporte, placée à distance de l'image imprimée et formant la zone de surface extérieure du fil de sécurité, une structure optiquement active (3) qui, au cours de l'examen de l'image imprimée à travers cette structure, agit de telle façon que pour différents angles de vision (α, β, γ) des zones différentes de l'image imprimée (a, b, c; 6) soient susceptibles d'être reconnues et en ce que l'image imprimée (a, b, c; 6), par rapport à la structure optique (3), présente une configuration telle que l'image optique qui apparaît du fil de sécurité (2) varie également en correspondance avec la variation de l'angle de vision (α, β, γ).

2. Document de sécurité selon la revendication 1, caractérisé en ce que cette structure optiquement active (3) est une structure en relief se composant d'une ou de plusieurs lentilles distinctes (4).

3. Document de sécurité selon la revendication 1, caractérisé en ce que les structures optiquement actives sont constituées par des zones de couches superficielles partiellement transparentes et exerçant un effet de diaphragme, telles que par exemple des structures de réseau imprimées, qui sont constituées d'un assemblage de zones transparentes et de zones opaques à la lumière.

4. Document de sécurité selon l'une des revendications 1 à 3, caractérisé en ce que le fil (2) présente une section transversale sensiblement rectangulaire et en ce que l'image inprimée (a, b, c; 6) et la structure (3) sont disposées respectivement sur deux surfaces opposées du fil de sécurité.

5. Document de sécurité selon l'une des revendications 1 à 4, caractérisé en ce que le fil de sécurité (2) présente une forme de section transversale sensiblement rectangulaire, en ce que le fil (2) comporte sur deux surfaces opposées, des structures optiquement actives (3) et en ce que l'image imprimée (a, b, c; 6) est disposée dans un plan de couches intérieur du fil de sécurité (2) sensiblement parallèle à ces surfaces.

6. Document de sécurité selon l'une des revendications 1 à 5, caractérisé en ce que les lentilles distinctes (4) sont des lentilles cylindriques, qui sont disposées longitudinalement ou transversalement à la direction du fil.

7. Document de sécurité selon l'une des revendications 1 à 6, caractérisé en ce que l'image imprimée (a, b, c; 6) est réalisée de telle façon qu'elle permette, sur une zone d'angle de vision déterminé, de reconnaître une information qui n'est pas visible en cas d'observation hors de cette zone angulaire.

8. Document de sécurité selon la revendication 7, caractérisé en ce que cette information est une coloration déterminée.

9. Document de sécurité selon la revendication 7, caractérisé en ce que cette information est un trait d'écriture.

10. Document de sécurité selon l'une des revendications 1 à 9, caractérisé en ce que cette image imprimée est réalisée de telle façon que, pour des angles de vision différents, une information apparaisse en des emplacements localement différents sur le fil de sécurité (2).

11. Document de sécurité selon l'une des revendications 1 à 10, caractérisé en ce que le fil de sécurité est recouvert seulement d'une mince couche de papier sensiblement transparente.

12. Document de sécurité selon l'une des revendications 1 à 11, caractérisé en ce que le document de sécurité (1), dans la zone du fil de sécurité (2), comporte des zones ou des ouvertures au moins partiellement transparentes.

13. Document de sécurité selon l'une des revendications 1 à 12, caractérisé en ce que le document de sécurité (1) est un papier valeur.
